# EUROPÄISCHE PATENTSCHRIFT

(11) **EP 1 240 989 B1**
(45) Veröffentlichungstag und Bekanntmachung des Hinweises auf die Patenterteilung: **12.05.2004**
(21) Anmeldenummer: 02004918.5
(22) Anmeldetag: 05.03.2002
(51) Int. Cl.: B29B 13/02, B29C 33/20, B29C 51/42, D21G 1/02

(54) **Heizwalze für eine Heizeinrichtung zum Erwärmen einer Folienbahn aus thermoplastischem Kunststoff**
Heater roller for a heating device for heating a film web of thermoplastic material
Cylindre chauffant pour un dispositif de chauffage pour chauffer une bande en matière thermoplastique

(30) Priorität: 16.03.2001 DE 10112736
(43) Veröffentlichungstag der Anmeldung: 18.09.2002
(73) Patentinhaber: Adolf Illig Maschinenbau GmbH & Co. KG, 74081 Heilbronn (DE)
(72) Erfinder: Karbach, Helmut, 74076 Heilbronn (DE)

(56) Entgegenhaltungen:
- EP-A- 0 829 693
- DE-C- 3 311 988
- US-A- 6 018 870

## Beschreibung

Die Erfindung betrifft eine Heizwalze für eine Heizeinrichtung zum Erwärmen einer Folienbahn aus thermoplastischem Kunststoff nach dem Oberbegriff des Hauptanspruches.

Aus der DE 33 11 988 C1 ist eine Heizeinrichtung mit Heizwalzen bekannt. Diese Heizwalzen bestehen bekannterweise aus einem im Schleuderguss oder im Kokillenguss hergestellten Rohr aus einer Aluminiumlegierung mit einem Außendurchmesser in der Größenordnung von 400 bis 600 mm und einer Wandstärke von ca. 30 mm. In die Wandung werden am Umfang eine Anzahl von Bohrungen eingebracht, um elektrische Heizpatronen einbauen zu können. Über einen Temperaturregler erfolgt das Beheizen der Heizwalzen auf eine einstellbare Temperatur.

Vorzugsweise ist die Oberfläche der Heizwalzen mit einer Antihaftbeschichtung versehen, z. B. teflonisiert, damit kein Ankleben der heißen Folie eintritt und sich Ausdünstungen aus der Folie und Schmutz wieder leicht von der Oberfläche der Heizwalze entfernen lassen.

Die Herstellung der Heizwalzen auf diese Weise ist mit einer Reihe von Nachteilen verbunden. Es gibt wenige Hersteller, die Heizwalzen in diesem Durchmesserbereich überhaupt gießtechnisch herstellen können oder wollen, weil dies mit Herstellungsproblemen verbunden ist. Da die bearbeiteten Heizwalzen eine saubere, porenfreie Oberfläche aufweisen müssen, führen Schlackeneinschlüsse und dadurch hervorgerufene Lunkerstellen unweigerlich zu Ausschuss oder aufwendiger Nacharbeit. Gerade diese Lunkerstellen sind aber fast nicht zu vermeiden und erst zu erkennen, wenn die Heizwalzenoberfläche bearbeitet - in der Regel überdreht - wird.

Sehr kostenintensiv ist die Herstellung der Bohrungen für die Heizpatronen, da die Heizwalzen eine Breite bis ca. 900 mm - je nach Breite der zu beheizenden Folienbahn - aufweisen müssen. Die Bohrungen müssen von der Toleranz her relativ genau sein. Eine Mindestgröße darf nicht unterschritten werden, weil die Heizpatronen sonst nicht montiert werden können. Sind die Bohrungen zu groß, findet kein gleichmäßiger Wärmeübergang statt. Die Heizwalzen haben dann eine ungleichmäßige Temperaturverteilung. Solche Bohrungen sind nur mit teuren speziellen Tieflochbohrmaschinen herzustellen und es besteht immer die Gefahr, dass der Bohrer auf diese Länge verläuft und die dünne Walzenwandung durchbricht. Ein unterschiedlicher Abstand zur Oberfläche hat wiederum eine ungleichmäßige Temperaturverteilung zur Folge.

Die Oberflächenbeschichtung der Heizwalzen ist ebenfalls problematisch, da nur wenige Hersteller in der Lage sind, so große Teile beschichten zu können. Mit beschichteten Heizwalzen muss sehr sorgfältig umgegangen werden, um eine Beschädigung der Oberfläche zu vermeiden, die eine aufwendige Neubeschichtung der ganzen Heizwalze bedingen würde. Dieser Umgang betrifft den Transport vom Beschichter zum Verwender, die Lagerung bis zum Einbau und den Einbau selbst. Eine aufwendige Verpackung nach der Beschichtung bis zur Verwendung ist erforderlich. Geeignete Transportmittel sind ebenfalls Bedingung. Insgesamt erfordern die großen Heizwalzen einen entsprechend großen Lagerplatz.

Aus der DE 35 39 500 A1 ist eine Walze bekannt, mit der eine Folienbahn in einem Segment beheizt, in einem zweiten Segment gekühlt wird. Die Walze besteht aus einem Außenring, einem Innenring und Stegen zwischen den beiden Ringen. Außenring und Innenring sind einstückig über den ganzen Umfang der Walze ausgebildet. Es kann davon ausgegangen werden - eine Beschreibung fehlt - dass die Teile miteinander verschweißt sind. Das Einbringen von Heizpatronen ist bei einer solchen Walze nicht möglich. Damit ist auch keine gleichmäßige Walzentemperatur, geregelt über einen Fühler, möglich, da die Wandung zu dünn ist. Die Probleme bezüglich Beschichtung sind wie vorgehend beschrieben ebenso gegeben, einschließlich der Unmöglichkeit des Austausches von Einzelteilen der Walze bei Beschädigung.

Der Erfindung liegt die Aufgabe zugrunde, diese Nachteile zu vermeiden. Es sollten insgesamt kleinere Bauteile Verwendung finden können, die sich leichter herstellen, transportieren, lagern und beschichten lassen. Die Bauteile sollten so gestaltet sein, dass sie sich zu einer großen Heizwalze' montieren lassen. Es sollten genaue Bohrungen für Heizpatronen gegeben sein, zum einen vom Durchmesser her, zum anderen von der Lage zur Oberfläche, die eine gleichmäßige Walzentemperatur zur Folge haben. Insgesamt sollte sich der Materialeinsatz und damit das Gewicht der Heizwalze gering sein bei gleichzeitiger Verbesserung der Temperaturkonstanz und einer Verkürzung der Aufheizzeit beim Einschalten. Die Heizwalze sollte deutlich billiger in der Herstellung werden.

Zur Lösung der Aufgabe wird vorgeschlagen, die Heizwalzen aus einzelnen Elementen zusammenzusetzen, die sich - da deutlich kleiner als die gesamte Heizwalze - aus einer Aluminiumlegierung im Strangpressverfahren herstellen lassen. Diese Elemente bilden jeweils einen - über den Umfang der Heizwalze betrachtet - Teilbereich der Heizwalze. Die Bohrungen für die Heizpatronen können in die Elemente gleich mit eingepresst werden, was mit ausreichender Genauigkeit technisch möglich ist. Diese Elemente werden mit Zentrierungen versehen, so dass die angrenzenden Elemente passgenau angefügt werden können. Von den Strangpressprofilen können die Elemente in jeder beliebigen Länge abgetrennt werden, so dass damit Heizwalzen verschiedener Breite hergestellt werden können. Die einzelnen Elemente einer Heizwalze können ausgetauscht werden, so dass im Falle einer Beschädigung, z. B. der Beschichtung, nicht die ganze Heizwalze neu beschichtet werden muss. Da Strangpressprofile eine hohe Genauigkeit aufweisen, ist eine Nachbearbeitung der Außenfläche nicht erforderlich, was die Kosten reduziert. Bei dieser Herstellung besteht keine Gefahr, dass Lunker in der Oberfläche der Heizwalze auftreten.

In Weiterbildung der Erfindung sollten die Elemente so gestaltet werden, dass sie einerseits eine hohe Stabilität gegen Verformung, z. B. bei der Aufheizung, aufweisen und dass sie sich mit einem Klemmprofil auf einfache Weise zusammenfügen und miteinander verbinden lassen.

Ein Ausführungsbeispiel einer Heizwalze mit 6 Elementen sowie vorteilhafte Gestaltungen sind anhand der schematischen Zeichnungen näher beschrieben. Es zeigen:
- Figur 1:: eine prinzipielle Darstellung einer Heizeinrichtung mit zwei Heizwalzen als Gesamtdarstellung.
- Figur 2:: eine Heizwalze, bestehend aus 6 Elementen.
- Figur 3:: vergrößert zwei Elemente mit Verbindung durch ein Klemmprofil.

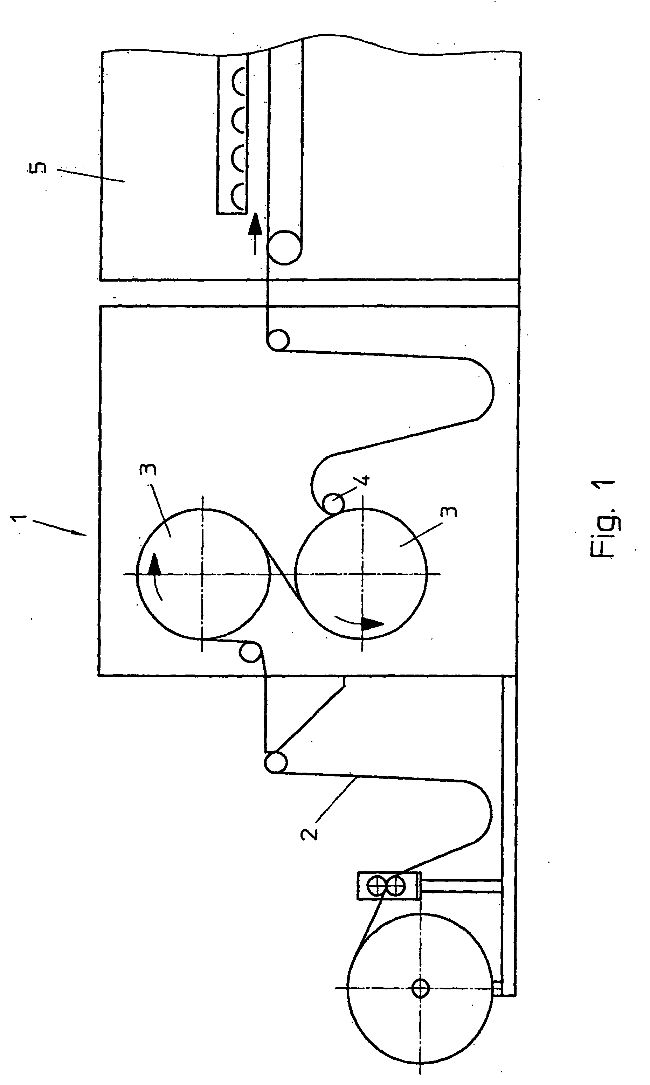

Figur 1 zeigt eine Heizeinrichtung 1, der eine kalte Folienbahn 2 aus thermoplastischem Kunststoff zugeführt wird und die diese mittels zwei Heizwalzen 3 erwärmt. Die Folienbahn 2 wird einer Thermoformeinrichtung 5 zugeführt, dort weiter erwärmt und durch Differenzdruck zu Behältern oder anderen Formteilen tiefgezogen. Der Einsatz einer solchen Heizeinrichtung ist bei bestimmtem Folienmaterial und ab einer bestimmten Foliendicke verfahrenstechnisch vorteilhaft. Je nach Verhältnissen können eine bis vier Heizwalzen vorgesehen sein. Alle Heizwalzen sind drehbar gelagert, der Folientransport erfolgt durch eine angetriebene Transportwalze 4, die gegen die in Durchlaufrichtung letzte Heizwalze 3 drückt.

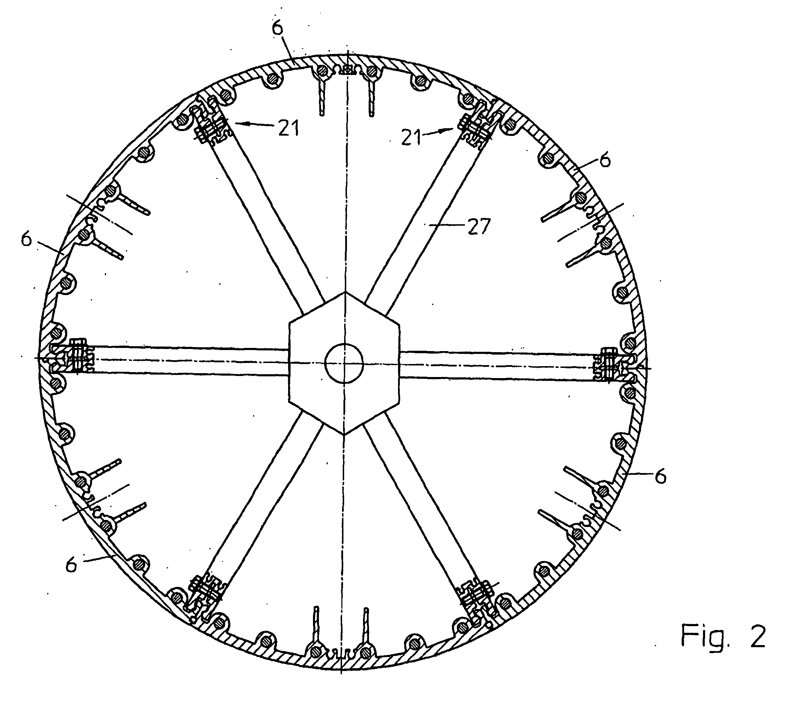

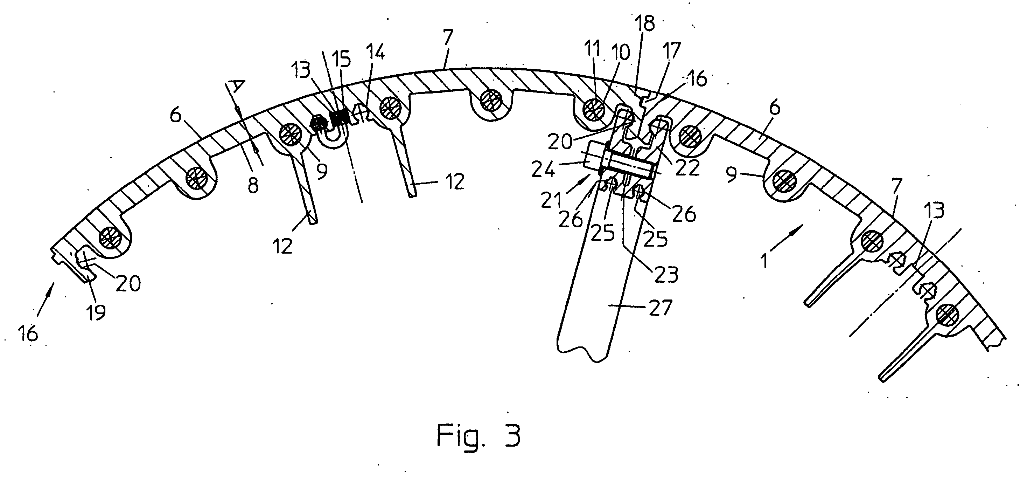

Jede Heizwalze 3 ist aus mehreren gleichartigen - vorzugsweise baugleichen - Elementen 6 zusammengesetzt. Figur 2 zeigt eine Heizwalze 3, die von sechs solchen baugleichen Elementen 6 gebildet wird, so dass also jedes Element 6 einen Walzenbereich von 60° bildet. Den Aufbau eines solchen Elementes 6 und die Verbindungsstelle selbst zwischen den einzelnen benachbarten Elementen 6 zeigt Figur 3.

Die Außenform 7 eines Elementes 6 ist dem fertigen Außendurchmesser der Heizwalze 3 angepasst. Parallel dazu verläuft die Innenform 8 im Abstand A, wobei dieser im Größenbereich von 10 bis 40 mm liegt. Die Innenform 8 weist wulstartige Erhöhungen 9 auf, in denen je eine Bohrung 10 zur Aufnahme einer Heizpatrone 11 bzw. zur Durchleitung eines Heizmediums angeordnet ist. Auf zwei oder mehreren der Erhöhungen 9 sind rippenförmige Stege 12 vorgesehen, die dem Element 6 eine hohe Steifigkeit verleihen. In der Mitte der Innenform 8 ist eine Nut 13 eingeformt, auf beiden Seiten dazu ist eine über die ganze Länge des Elementes 6 verlaufende hinterschnittene Nut 14 vorgesehen. Die Nut 14 dient zur Aufnahme eines Temperaturfühlers 15, der an einer Stelle - z. B. mittig - montiert wird. Das elektrische Zuführkabel zu diesem kann auf einfache Weise in eine der Nuten 14 eingelegt und nach außen geführt werden und hält in der Nut 14 klemmend durch den Hinterschnitt.

An den Stirnseiten 16, die die Verbindungsstelle zweier Elemente 6 bilden, ist jedes Element 6 mit Zentriereinrichtungen versehen. Eine Stirnseite 16 weist hierzu einen Vorsprung 17 auf, die andere Stirnseite 16 eine entsprechende Nut 18. Auf diese Weise sind beide Elemente 6 an der Verbindungsstelle so zueinander zentriert, dass angrenzende Außenflächen 7 ansatzlos ineinander übergehen. Eine andere Gestaltung der Zentrierung, z. B. durch V-förmige Gestaltung von Vorsprung 17 und Nut 18, ist möglich.

Zur Verbindung der beiden Stirnseiten 16 der Elemente 6 wird gemäß einer Weiterbildung der Erfindung vorgeschlagen, an den Stirnseiten 16 je einen über die Innenform 18 vorstehenden Steg 19 mit einer Hohlkehle 20 vorzusehen und eine Verbindung über eine Klemmleiste 21 vorzunehmen. Diese Klemmleiste 21 weist zwei Schenkel 22 auf, die so geformt sind, dass sie in der Hohlkehle 20 anliegen. Die Schenkel 22 sind über einen Steg 23 verbunden und Schrauben 24 dienen zum Verspannen der Stege 19 über die Schenkel 22. An der Unterseite des Steges 23 sind zwei Hohlkehlen 25 eingeformt in der Größe des Kemlochdurchmessers eines genormten Gewindes, so dass stirnseitig bei Bedarf direkt ein Gewinde 26 geschnitten werden kann. Die Gewinde 26 dienen zur Montage von stirnseitigen Speichen 27, mit denen die gesamte Heizwalze 3 aufgehängt und gelagert wird. Diese Klemmleisten 21 verlaufen entweder über die ganze Breite der Heizwalze 3 oder örtlich. Der Querschnitt der Elemente 6 und der Klemmleiste 21 ist über deren ganze Länge gleich, so dass diese Teile einschließlich Bohrungen 10, Nuten 13 und Hohlkehlen 14, 20, 26 aus einer Aluminiumlegierung im Strangpressverfahren hergestellt werden können. Aus diesen Profilstäben werden die Elemente 6 und die Klemmleisten 21 mit erforderlicher Länge abgeschnitten und mit geringer Nachbearbeitung - Bohrungen für Schrauben 24 und die Gewinde hierzu sowie Gewinde 26 - hergestellt.

Eine Antihaftbeschichtung zumindest der Außenform 17 ist bei diesen relativ geringen Abmessungen eines Elementes 6 ohne Probleme möglich.

## Patentansprüche

1. Heizwalze für eine Heizeinrichtung zum Erwärmen einer Folienbahn (2) aus thermoplastischem Kunststoff mit rohrförmiger Gestalt und mit Löchern (10) in ihrer Wandung zum Einbau von Heizpatronen (11) bzw. zur Durchleitung eines Heizmediums, **dadurch gekennzeichnet, dass** sie aus gleichartigen, miteinander verbundenen Elementen (6) besteht, von denen jedes - über den Umfang betrachtet - einen Teilbereich der Heizwalze bildet.

2. Heizwalze nach Anspruch 1, **dadurch gekennzeichnet, dass** an den Stirnseiten (16) der Elemente (6) Zentriereinrichtungen (17, 18) vorgesehen sind.

3. Heizwalze nach Anspruch 2, **dadurch gekennzeichnet, dass** die Zentriereinrichtung aus einem im Querschnitt rechteckigen Vorsprung (17) und einer auf der Gegenseite vorgesehenen rechteckigen Nut (18) besteht.

4. Heizwalze nach Anspruch 2, **dadurch gekennzeichnet, dass** die Zentriereinrichtung aus einem im Querschnitt V-förmigen Vorsprung (17) und einer auf der Gegenseite vorgesehenen V-förmigen Nut (18) besteht.

5. Heizwalze nach einem der Ansprüche 1 bis 4, **dadurch gekennzeichnet, dass** an der Innenform (8) der Elemente (6) wulstartige Erhöhungen (9) vorgesehen sind, in denen die Löcher (10) für die Heizpatronen (11) bzw. zum Durchleiten eines Heizmediums verlaufen.

6. Heizwalzen nach einem der Ansprüche 1 bis 5, **dadurch gekennzeichnet, dass** die Elemente (6) an jeder Stirnseite (16) je einen Steg (19) aufweisen, der über die Innenform (8) vorsteht und in dessen Bereich eine Verbindung für die Elemente (6) vorgesehen ist.

7. Heizwalzen nach Anspruch 6, **dadurch gekennzeichnet, dass** die Stege (19) eine Hohlkehle (20) aufweisen, die von einer Klemmleiste (21) mit entsprechender Gestalt umgriffen und verspannt werden.

8. Heizwalzen nach Anspruch 6, **dadurch gekennzeichnet, dass** die Klemmleiste (21) aus einem Profil mit zwei durch einen Steg (23) verbundenen Schenkeln (22) besteht, wobei im Bereich der Schenkel (22) Schrauben (24) zum Verspannen angeordnet sind.

9. Heizwalze nach einem der Ansprüche 1 bis 8, **dadurch gekennzeichnet, dass** das Profil der Klemmleiste (21) mindestens eine Hohlkehle (25) zur stirnseitigen Anbringung eines Gewindes (26) aufweist.

10. Heizwalze nach einem der Ansprüche 1 bis 9, **gekennzeichnet durch** an den wulstartigen Erhöhungen (9) angeordnete Versteifungsstege (12).

11. Heizwalze nach einem der Ansprüche 1 bis 10, **gekennzeichnet durch** eine im Bereich der Innenform (8) des Elementes (6) eingeformte Nut (13) zur Aufnahme eines Temperaturfühlers (15).

12. Heizwalze nach Anspruch 11, **dadurch gekennzeichnet, dass** neben der Nut (13) mindestens eine Nut (14) mit Hinterschnitt eingeformt ist zur Aufnahme einer elektrischen Stromzufuhr zum Temperaturfühler (15).

## Revendications

1. Cylindre chauffant pour un dispositif de chauffage pour chauffer une bande en matière thermoplastique (2) de forme tubulaire dotée de trous (10) dans sa paroi permettant de monter des cartouches chauffantes (11) ou de faire transiter un liquide chauffant,
**caractérisé en ce qu'**
il est composé d'éléments (6) similaires reliés les uns aux autres et dont chacun forme une partie du cylindre chauffant, au niveau de la périphérie.

2. Cylindre chauffant selon la revendication 1,
**caractérisé en ce que**
des dispositifs de centrage (17, 18) sont prévus sur les faces frontales (16) des éléments (6).

3. Cylindre chauffant selon la revendication 2,
**caractérisé en ce que**
le dispositif de centrage se compose d'une saillie (17) rectangulaire en coupe transversale et d'une rainure (18) rectangulaire prévue sur le côté opposé.

4. Cylindre chauffant selon la revendication 2,
**caractérisé en ce que**
le dispositif de centrage se compose d'une saillie (17) en forme de V en coupe transversale et d'une rainure (18) en forme de V prévue sur le côté opposé.

5. Cylindre chauffant selon l'une quelconque des revendications 1 à 4,
**caractérisé en ce que**
des élévations (9) en bourrelet prévues dans le moule intérieur (8) des éléments (6) accueillent les trous (10) pour les cartouches chauffantes (11) ou permettent le transit d'un liquide chauffant.

6. Cylindres chauffants selon l'une quelconque des revendications 1 à 5,
**caractérisés en ce que**
les éléments (6) présentent chacun sur chaque face frontale (16) une nervure (19) qui fait saillie sur le moule intérieur (8) et à proximité de laquelle une jonction est prévue pour les éléments (6).

7. Cylindres chauffants selon la revendication 6,
**caractérisés en ce que**
les nervures (19) comportent une gorge (20) enveloppée et pressée par une barrette de serrage (21) d'une forme correspondante.

8. Cylindres chauffants selon la revendication 6,
**caractérisés en ce que**
la barrette de serrage (21) se compose d'un profil avec deux branches (22) reliées par une nervure (23), des vis (24) étant disposées dans la zone des branches (22) pour assurer le serrage.

9. Cylindre chauffant selon l'une quelconque des revendications 1 à 8,
**caractérisé en ce que**
le profil de la barrette de serrage (21) comporte au moins une gorge (25) pour placer un filet (26) côté face frontale.

10. Cylindre chauffant selon l'une quelconque des revendications 1 à 9,
**caractérisé par**
des nervures de renfort (12) disposées sur les élévations (9) en bourrelet.

11. Cylindre chauffant selon l'une quelconque des revendications 1 à 10,
**caractérisé par**
une rainure (13) formée dans la zone du moule intérieur (8) de l'élément (6) pour loger un capteur de température (15).

12. Cylindre chauffant selon la revendication 11,
**caractérisé en ce qu'**
au moins une rainure (14) est formée avec une coupe arrière à côté de la rainure (13) pour loger une alimentation de courant électrique vers le capteur de température (15).

## Claims

1. Heating roller for a heating device for heating a film strip (2) of thermoplastic synthetic material, with tubular form and with holes (10) in the wall thereof for installation of heating cartridges (11) or for conducting a heating medium, **characterised in that** it consists of identical elements (6) which are connected together and each of which forms - considered over the circumference - a part region of the heating roller.

2. Heating roller according to claim 1, **characterised in that** centring devices (17, 18) are provided at the end faces (16) of the elements (6).

3. Heating roller according to claim 2, **characterised in that** the centring device consists of a projection (17) which is rectangular in cross-section and of a rectangular groove (18) provided on the opposite side.

4. Heating roller according to claim 2, **characterised in that** the centring device consists of a projection (17) which is V-shaped in cross-section and of a V-shaped groove (18) provided on the opposite side.

5. Heating roller according to one of claims 1 to 4, **characterised in that** provided at the internal shape (8) of the elements (6) are bead-like elevations (9) in which the holes (10) for the heating cartridges (11) or for conducting a heating medium extend.

6. Heating roller according to one of claims 1 to 5, **characterised in that** the elements (6) each have at each end face (16) a respective web (19) which protrudes beyond the internal shape (8) and in the region of which a connection for the elements (6) is provided.

7. Heating roller according to claim 6, **characterised in that** the webs (19) have a hollow core (20), which is engaged around and tightened by a clamping strip (21) with a corresponding shape.

8. Heating roller according to claim 6, **characterised in that** the clamping strip (21) consists of a profile with two limbs (22) connected by a web (23), wherein screws (24) for the tightening are arranged in the region of the limb (22).

9. Heating roller according to one of claims 1 to 8, **characterised in that** the profile of the damping strip (21) has a least one hollow core (25) for application of a thread (26) at the end face.

10. Heating roller according to one of claims 1 to 9, **characterised by** stiffening webs (12) arranged at the bead-like elevations (9).

11. Heating roller according to one of claims 1 to 10, **characterised by** a groove (13), which is formed in the region of the internal shape (8) of the element (6), for reception of a temperature sensor (15).

12. Heating roller according to claim 11, **characterised in that** apart from the groove (13) at least one groove (14) with an undercut is formed for reception of an electrical current feed for the temperature sensor (15).
